# EUROPEAN PATENT APPLICATION

(11) **EP 3 336 260 A1**
(43) Date of publication of application: **20.06.2018**
(21) Application number: 17205067.6
(22) Date of filing: 04.12.2017
(51) Int. Cl.: E02D 27/42

(54) **CONSTRUCTION METHOD OF A TOWER FOUNDATION**

(30) Priority: 19.12.2016 ES 201600833
(71) Applicant: Siemens Gamesa Innovation & Technology, S.L., 31621 Sarriguren Navarra (ES)
(72) Inventor: SUDHANSU BHUSAN, PRUSTY, 600119 CHENNAY (IN); ALONSO GAINZA, JAVIER, 31621 SARRIGUREN (ES)

(57) **Abstract**

The invention provides an in-situ concreting construction method of tower foundations (10), particularly wind turbine tower foundations, configured by a base slab (11) with a circular or a polygonal shape, a pedestal (13) with a cylindrical or a prismatic shape and a plurality of radial walls (15) with a prismatic-triangular or a prismatic-trapezoidal shape extending from the pedestal (13) towards the outer edge of the base slab (11). The construction method comprises a curing step in which water is supplied to the foundation in an automatically controlled mode from a plurality of water emitters (59) arranged in water distribution pipes (55, 57) placed over predetermined locations of the foundation (10).

## Description

### FIELD OF THE INVENTION

The present invention relates to tower foundations and particularly to foundations of wind turbine towers.

### BACKGROUND

A known configuration of the foundation of wind turbine towers comprises a base slab, a pedestal (in which the tower is supported) and radial walls extending from the pedestal to the edge of the base slab.

Given the situation away from the urban centers of wind turbine towers and the size of the foundation its construction by in-situ concreting methods poses several problems that have led to a number of proposals of construction methods using prefabricated elements as those described in US 2007/181767 A1, WO 2008/036934 A1 and WO 2015/124815 A1.

Proposals to reduce the size of the foundation are also known such as that described in WO 2010/138978 A1 in which a three dimensional network of post-tensioning elements to achieve a desirable combination of high stiffness and greater fatigue resistance is used. The foundation design reduces the weight and volume of materials used, reduces cost, and improves heat dissipation conditions during construction by having a small ratio of concrete mass to surface area thus eliminating the risk of thermal cracking due to heat of hydration.

However, the construction of foundations of wind turbine towers (and other type of towers) by in-situ concreting methods has the great advantage that a monolithic structure is achieved so that the industry demands foundation construction methods that solve the problems of known in-situ construction methods, particularly the high cost of the curing step.

### SUMMARY OF THE INVENTION

The invention provides an in-situ concreting construction method of tower foundations (particularly wind turbine tower foundations) configured by a base slab, a pedestal and a plurality of radial walls extending from the pedestal towards the outer edge of the base slab.

Relevant steps of the construction method are the placing in position of the anchor cage of the pedestal using leveling legs and the curing of the foundation supplying water in an automatically controlled mode to the foundation from a plurality of water emitters arranged in water distribution pipes placed over predetermined locations of the foundation.

A tower foundation constructed with the method of the invention can be configured with a base slab with a circular or a polygonal shape and having a uniform thickness or a decreasing thickness between the pedestal and its outer edge, with a pedestal of a cylindrical or a prismatic shape, and with radial walls of a prismatic-triangular shape having a uniform thickness or a decreasing thickness along its length or radial walls of prismatic-trapezoidal shape leaving a void space between them and both the pedestal and the base slab.

Said configurations provide suitable options for choosing the configuration of the foundation having a better ratio steel/concrete taking into account their market prices.

Other characteristics and advantages of the present invention will be clear from the following detailed description of embodiments illustrative of its object in relation to the attached drawings.

### BRIEF DESCRIPTION OF THE DRAWINGS

Figure 1 is a perspective view of a tower foundation that can be constructed with the method of the invention.
Figure 2 is a perspective view of the anchor cage of the tower foundation placed over leveling legs arranged over the foundation pavement.
Figure 3 is a partial perspective view of the reinforcement of the tower foundation.
Figure 4 is a schematic perspective view of the water supply installation used in the curing step of the construction method of the invention.
Figures 5 and 7 are perspective views of tower foundations that can be constructed with the method of the invention.
Figure 6 is a plan view of a tower foundation that can be constructed with the method of the invention.
Figure 8 is a sectional view of a tower foundation that can be constructed with the method of the invention.

### DETAILED DESCRIPTION OF THE INVENTION

### Construction method

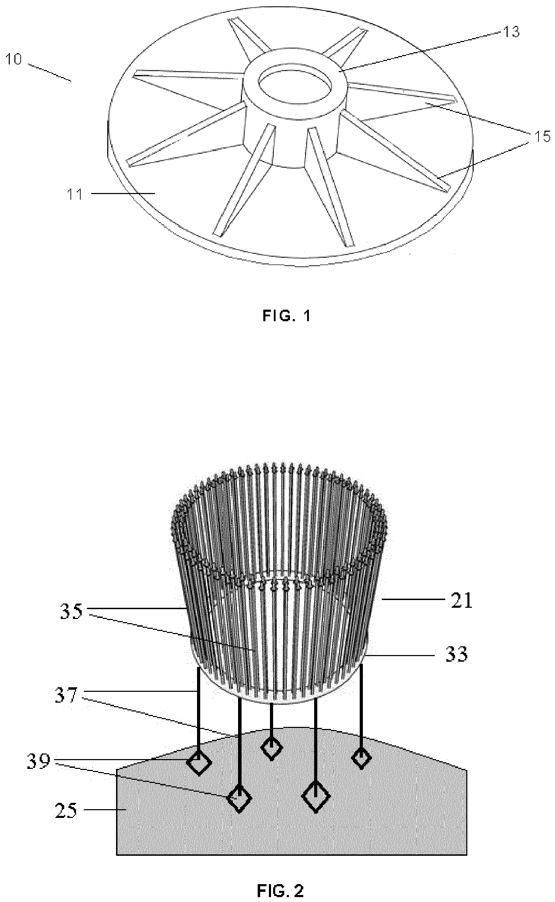

The construction method of the invention is applicable to a foundation 10 of a tower configured by a circular base slab 11, a cylindrical pedestal 13 and a plurality of prismatic-triangular radial walls 15 extending from the cylindrical pedestal 13 towards the outer edge of the base slab 11 (see Figure 1) and also to foundations with a base slab 11, a pedestal 13 and radial walls 15 of different shapes as will be discussed later.

The construction method of the invention comprises the following main steps (see Figures 2-4):

### a) Preparation of the site

The site is cleared of trees, shrubs and all objectionable material which will interfere the construction.

The excavation of foundation is carried out by excavator machine to the exact length, thickness, depth and profile required.

The bottom of excavation is slightly watered and thoroughly rammed.

Thereafter plain cement concrete is laid to form a pavement 25 and, at least 12 hours, are needed for setting. During that period no works are performed over the pavement 25.

### b) Placing the anchor cage and the reinforcement

The anchor cage 21, that comprises a lower flanges 33, a plurality of bolts 35 and cooperating nuts to fasten them to flange 33 is assembled and placed in position with the aid of leveling legs 37 with base plates 39 (see Figure 2) as follows:
Firstly, the position of the base plates 39 is marked on the pavement 25.
Secondly, the leveling legs 37 with the base plates 39 are fixed to the pavement 25.
Thirdly, the lower flange 33 is introduced on the leveling legs 37, a first set of guide bolts 35 are positioned and tightened to the lower flange 33. Then the remaining bolts 35 are placed in the lower flange 33. A torque minimum preload is applied to the nuts positioned under the lower flange 33 using a wrench.

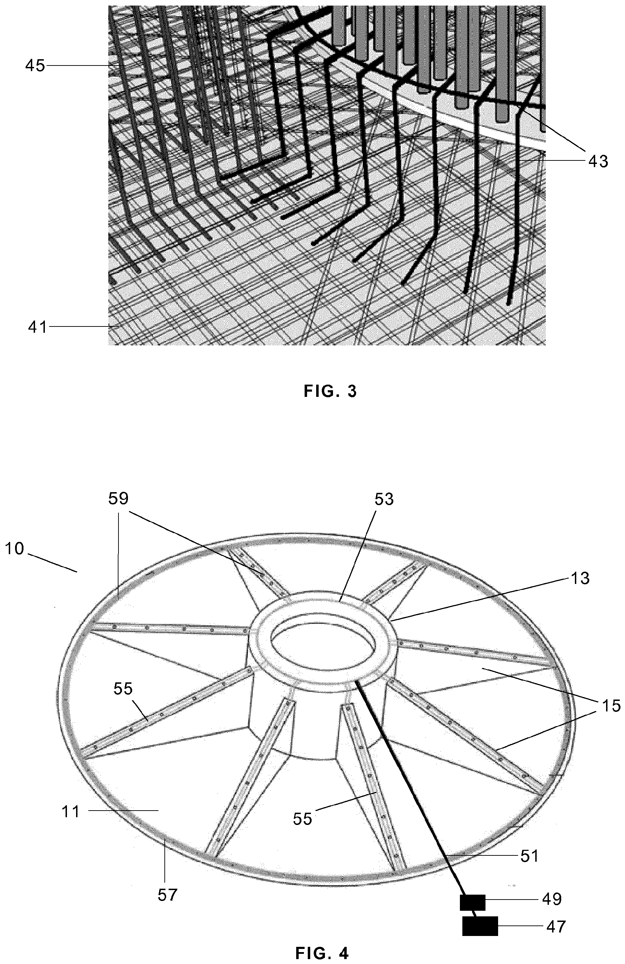

The reinforcement 41 of the base slab 11, the reinforcement 43 of the pedestal 13 and the reinforcement 45 of the radial walls 15 are positioned in place firmly wired (see Figure 3).

Reinforcements 41, 43, 45 shall have the required cover and where not specified the thickness of cover shall be a minimum of 50mm.

### c) Formwork

The formwork panels shall be adequately strutted, braced and propped to prevent deflection under deadweight concrete and superimposed live load of work men, materials and to withstand vibration and wind.

### d) Concreting

A pump shall be preferably used to deliver concrete of the required consistency and plasticity without segregation or loss of slump.

Pouring of concrete will start in a circular way from the edges of the foundation and in layers with a thickness of 30cm approximately.

The concrete will be compacted to achieve maximum density using mechanical vibrators. The minimum diameter of the vibrator needle for raft concrete is 60mm. However smaller diameter vibrator needle also can be used for the congested reinforcement areas around embedment.

### e) Formwork stripping

The formwork panels shall be removed after a predetermined period from the finishing time of concrete pouring.

### f) Curing

After the formwork stripping, the exposed concrete surfaces shall be properly cured keeping them constantly wet for at least 10 days, a period that can be extended by maintaining the concrete in a damp condition for an additional period depending on 7th day cube test results. The vertical side of the concrete surfaces shall be covered by wet gunny bags tied with ropes all around.

Unlike known curing methods, the invention contemplates the use of an automatic curing system by means of a water supply system that is installed on the foundation immediately after the formwork stripping.

In an embodiment the water supply system comprises (see Figure 4) a water tank 47, a pumping unit 49, a feeding pipe 51 connected with the water tank 47 and the pumping unit 49, a circular pipe 53 arranged on the cylindrical pedestal 13 and distribution pipes 55, 57 with water emitters 59 for the water supply to the foundation 10 and a control system (not shown) that allows controlling the frequency of curing (which is set according to weather conditions) or, in other words, the water supply times. Pipes 55 are arranged over the radial walls 15 and pipe 57 is arranged over the edge of the base slab 11. The pumping unit 49 takes water from the water tank 47 and deliver water with right pressure to the feeding pipe 51.

In an embodiment, the distribution pipes 55, 57 are PVC pipes of 1,5 inches with water emitters 59 (having typically a diameter of 2mm) placed 1m apart from each other.

One advantage of this curing method is that allows reducing manpower costs and ensures that curing is perfectly done and hence a quality foundation can be achieved because it can be assured that all locations of the foundation are effectively cured. On the other hand water losses are avoided.

These advantages are particularly relevant for curing the vertical faces of the foundation 10.

### g) Backfilling and grouting

Once the curing is completed, backfilling can be proceeded layer wise with each layer of backfilling not exceeding 300mm thickness after each layer of backfilling. Necessary tests are conducted to ensure that backfilling has achieved the required density. The grouting can be done only once the concreting is completed.

### Foundation configurations

The construction method of the invention is also applicable to tower foundations having different configurations to that shown in Figures 1-4 oriented whether to an improvement of their structural behavior to meet particular needs and/or to reach an optimum ratio steel/concrete of the foundation taking into account the market prices of steel and concrete.

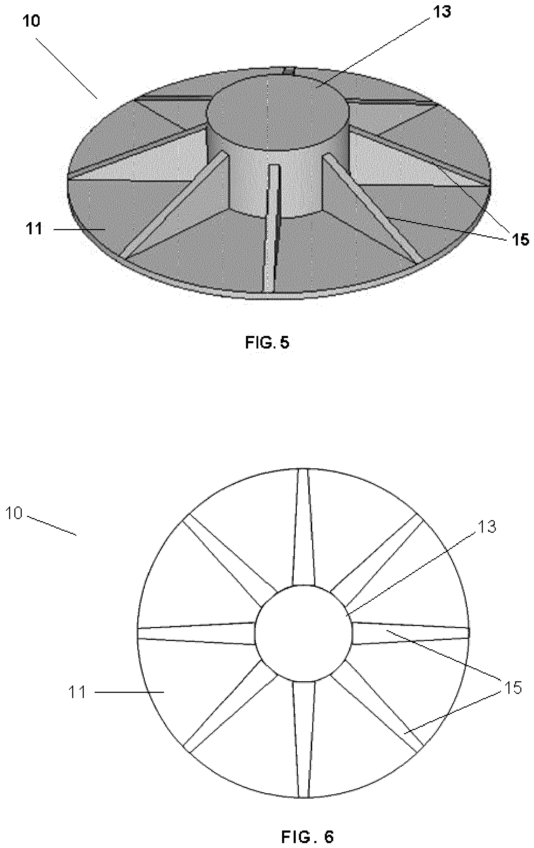

Foundations where the pedestal 13 is configured with a prismatic shape instead of a cylindrical shape and/or where the base slab 11 is configured with a polygonal shape (see Figure 5) instead of a circular shape can be mentioned as examples of foundation configurations intended to meet particular needs.

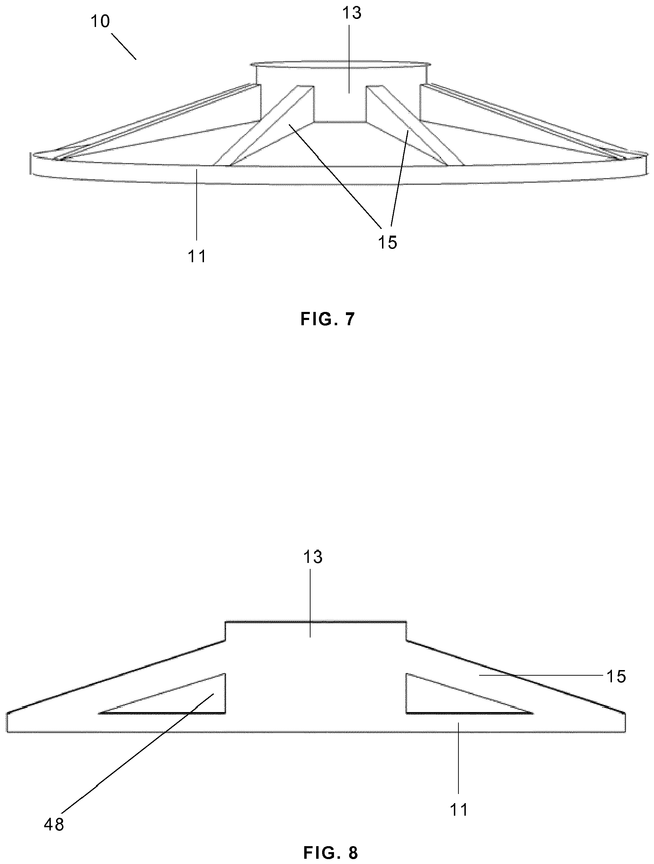

Foundations with a different ratio steel/concrete than that of the embodiment shown in Figures 1-4 can be achieved whether increasing the volume of the radial walls 15 (see Figure 6) or increasing the volume of the base slab 11 (see Figure 7) without a proportional increase of the reinforcement of the radial walls 15 or the base slab 11.

In the first case, the reduction of the ratio steel/concrete of the foundation 10 is achieved with radial walls 15 having a variable thickness from the pedestal 13 to the outer edge of the base slab 11.

In the second case, the reduction of the ratio steel/concrete of the foundation 10 is achieved with a base slab 11 having a variable thickness from the pedestal 13 to its outer edge.

A combination of the configurations shown in Figures 6 and 7 would also allow a reduction of the ratio steel/concrete of the foundation.

An increase of the ratio steel/concrete can be achieved with the configuration shown in Figure 8 where the radial walls 15 do not extend along the whole pedestal 13 and along the whole base slab 11. They are configured with a prismatic-triangular shape and leave a void space 48 between them and both the pedestal 13 and the base slab 11. The reinforcement needed would be similar to that of the radial walls shown in Figure 1 but the concrete volume will be smaller.

Although the present invention has been described in connection with various embodiments, it will be appreciated from the specification that various combinations of elements, variations or improvements therein may be made, are within the scope of the invention as defined by the appended claims.

## Claims

1. Construction method of the foundation (10) of a tower;
comprising the following steps: a) Preparation of the site including the construction of a pavement (25) of plain cement concrete; b) Placing the anchor cage (21) and the reinforcement; c) Formwork; d) Concreting; e) Formwork stripping; f) Curing;
wherein:
- Step b) is carried out in the following sub-steps: b1) Placing leveling legs (37) with base plates (39) fixed to the pavement (25) as positioning means for the anchor cage (21); b2) placing the reinforcement (41) of the base slab (11); b3) placing in position the anchor cage (21) with the leveling legs (37) fastened to the lower flange (33); b4) placing the reinforcement (43, 45) of the pedestal (13) and the radial walls (15);
- Steps c), d), and e) are carried out sequentially for the whole foundation (10);
- Step f) is carried out supplying water in an automatically controlled mode to the foundation (10) from a plurality of water emitters (59) arranged in water distribution pipes (55, 57) placed over predetermined locations of the foundation (10).

2. Construction method according to claim 1, wherein the automatically controlled mode of supplying water to the foundation (10) comprise controlling at least the supply times along a predetermined period of time.

3. Construction method according to claim 1, wherein said water distribution pipes (55, 57) are located, respectively, over the radial walls (15) and the base slab (11).

4. Construction method according to claim 1, wherein the base slab (11) is configured with a circular or a polygonal shape.

5. Construction method according to claim 4, wherein the base slab (11) is configured with a uniform thickness or a decreasing thickness between the pedestal (13) and the outer edge.

6. Construction method according to claim 1, wherein the pedestal (13) is configured with a cylindrical or a prismatic shape.

7. Construction method according to claim 1, wherein the radial walls (15) are configured with a prismatic-triangular or a prismatic-trapezoidal shape.

8. Construction method according to claim 7, wherein the radial walls (15) are configured with a prismatic-triangular shape having a uniform thickness along its length or a decreasing thickness in the direction towards the outer edge.

9. Construction method according to claim 7, wherein the radial walls (15) are configured with a prismatic-trapezoidal shape leaving a void space (48) between them and both the pedestal (13) and the base slab (11).

10. Construction method according to any of claims 1-9, wherein the tower belongs to a wind turbine.

11. Tower foundation (10) wherein is being configured by a base slab (11), a pedestal (13) and a plurality of radial walls (15) extending from the pedestal (13) towards the outer edge of the base slab (11);
the pedestal (13) including an anchor cage (21) as attachment means of the tower to the foundation (10) which is formed by upper flange (33) and a set of bolts (35) and cooperating nuts for fastening them to the lower flange (33).
